# EUROPEAN PATENT APPLICATION

(11) **EP 4 345 615 A1**
(43) Date of publication of application: **03.04.2024**
(21) Application number: 22831830.9
(22) Date of filing: 23.06.2022
(51) Int. Cl.: G06F 9/455

(54) **STORAGE RESOURCE MANAGEMENT METHOD, APPARATUS, AND SYSTEM FOR CONTAINER CLUSTER**

(30) Priority: 01.07.2021 CN 202110745811
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Körber, Martin Hans
(86) International application number: PCT/CN2022/100729
(87) International publication number: WO 2023/274014

(57) **Abstract**

This application provides a method and an apparatus for managing storage resources of a container cluster, and a system, and belongs to the field of computer technologies. In this application, storage resource description information is provided, and a storage resource requirement of a container cluster managed by a CCM is defined in the storage resource description information. The CCM initiates a resource allocation procedure to a VIM based on the storage resource description information, to complete configuration of a container cluster storage resource that meets the requirement of the description information. The container cluster storage resource is managed in a model description (description) manner. Therefore, this helps flexibly deploy a storage policy of the container cluster, to perform differentiated deployment and configuration on storage resources at different layers in the container cluster, so that the container cluster storage resource dynamically and flexibly adapts to different network service requirements.

## Description

This application claims priority to Chinese Patent Application No. 202110745811.4, filed on July 1, 2021 and entitled "METHOD AND APPARATUS FOR MANAGING STORAGE RESOURCES OF CONTAINER CLUSTER, AND SYSTEM", which is incorporated herein by reference in its entirety.

### TECHNICAL FIELD

This application relates to the field of computer technologies, and in particular, to a method and an apparatus for managing storage resources of a container cluster, and a system.

### BACKGROUND

A container cluster is a system that includes a process of running of one or more containers. In the European Telecommunications Standards Institute (European telecommunications standards institute, ETSI) standard, a concept corresponding to the container cluster is a container infrastructure service cluster (container infrastructure service cluster, CIS cluster).

A container cluster management (container cluster management, CCM) is a management plane network element in a network functions virtualization (network functions virtualization, NFV) management orchestration system. The CCM is responsible for managing the container cluster.

The container cluster management includes container cluster computing resource management, container cluster storage resource management, and container cluster network resource management. Currently, an effective method needs to be urgently provided to configure a container cluster storage resource more flexibly.

### SUMMARY

Embodiments of this application provide a method and an apparatus for managing storage resources of a container cluster, and a system, to help more flexibly configure a container cluster storage resource. The technical solutions are as follows.

According to a first aspect, a method for managing storage resources of a container cluster is provided. The method includes: A container cluster management CCM obtains storage resource description information, where the storage resource description information is used to describe a storage resource requirement of a container cluster object managed by the CCM, and the container cluster object includes at least one of a container cluster group, a container cluster, or a container cluster node; the CCM generates a resource allocation request based on the storage resource description information, where the resource allocation request indicates a virtualized infrastructure manager VIM to allocate a storage resource; and the CCM sends the resource allocation request to the VIM.

In the foregoing method, the storage resource description information is provided, and the storage resource requirement of the container cluster managed by the CCM is defined in the storage resource description information. The CCM initiates a resource allocation procedure to the VIM based on the storage resource description information, to complete configuration of a container cluster storage resource that meets the requirement of the description information. The container cluster storage resource is managed in a model description (description) manner. Therefore, this helps flexibly deploy a storage policy of the container cluster, to perform differentiated deployment and configuration on storage resources at different layers in the container cluster, so that the container cluster storage resource dynamically and flexibly adapts to different network service requirements.

In a possible implementation, the storage resource description information includes a first attribute of the storage resource, and the first attribute indicates a layer of a container cluster object to which the storage resource is applicable.

In the foregoing implementation, an attribute for describing an object layer is defined in the storage resource description information, so that differentiated deployment configuration is performed on storage resources at different layers in the container cluster, and a storage policy of the container cluster is more flexibly deployed.

In a possible implementation, the storage resource description information includes a second attribute of the storage resource. The second attribute indicates whether the storage resource is statically provided or dynamically allocated. The statically providing the storage resource is that the storage resource is allocated before the container cluster object is created. The dynamically allocating the storage resource is that the storage resource is allocated in a creation process of the container cluster object.

In the foregoing implementation, because the second attribute is defined in the storage resource description information, space for selection can be provided for a user in a deployment process of the container cluster object, to be specific, the storage resource is planned for deployment or the storage resource is subsequently deployed in the creation process of the container cluster object. In this way, the solution is more flexible, and is more applicable to a dynamically changing requirement.

In a possible implementation, the storage resource description information includes a third attribute of the storage resource, and the third attribute is used to describe an affinity rule or an anti-affinity rule that the storage resource needs to meet.

In the foregoing implementation, the affinity rule or the anti-affinity rule that the storage resource needs to meet is defined in the storage resource description information. Therefore, this helps a physical range of the storage resource meet an isolation requirement.

In a possible implementation, the third attribute of the storage resource is the same as an affinity rule or an anti-affinity rule of a container cluster node bound to the storage resource. In other words, a container cluster node storage resource multiplexes the affinity rule or the anti-affinity rule of the container cluster node.

In a possible implementation, the storage resource description information includes a fourth attribute of the storage resource, and the fourth attribute is used to describe whether the storage resource is a persistent storage resource or an ephemeral storage resource.

The persistent storage resource is, for example, one or more hard disks or one or more hard disk arrays (for example, hard disk enclosures). The hard disk is, for example, a solid state disk (solid state disk, SSD), a hard disk drive (hard disk drive, HDD) or the like. The ephemeral storage resource is, for example, a memory resource.

The foregoing implementation helps to implement differentiated deployment of two types of storage resources: the persistent storage resource and the ephemeral storage resource, to improve flexibility.

In a possible implementation, the storage resource description information includes a fifth attribute of the storage resource. The fifth attribute is used to describe whether the storage resource is a dedicated storage resource or a shared storage resource. The dedicated storage resource is a storage resource that is allowed to be used only by a specific sub-object in the container cluster object. The shared storage resource is a storage resource that is allowed to be used by each sub-object in a plurality of sub-objects in the container cluster object.

The specific sub-object in the container cluster object is, for example, one specified container cluster node in the container cluster, or one specified container cluster in the container cluster group.

According to the foregoing implementation, a storage resource can be configured as a storage resource dedicated to a specified container cluster or a container cluster node, or a storage resource can be configured as a storage resource shared by a plurality of container clusters or a storage resource shared by a plurality of container cluster nodes, to improve flexibility of managing the storage resource.

In a possible implementation, the storage resource description information includes a sixth attribute of the storage resource, and the sixth attribute includes at least one of a name of the storage resource, a specification of the storage resource, and description information of a virtual link connected to the storage resource.

In the foregoing implementation, a basic attribute, for example, a specification and a name of a storage resource can be defined in the description information, to improve solution availability.

In a possible implementation, after the CCM sends the resource allocation request to the VIM, the method further includes: The CCM receives a resource allocation response from the VIM, where the resource allocation response indicates a storage resource already allocated by the VIM; and the CCM configures, for the container cluster object, the storage resource already allocated by the VIM.

In a possible implementation, the method further includes: The CCM receives a creation request from a CCM consumer, where the CCM consumer is an operation support system OSS/business support system BSS or a network functions virtualization orchestrator NFVO, and the creation request indicates the CCM to create the container cluster object; the CCM creates the container cluster object; and the CCM sends a creation response to the CCM consumer.

In a possible implementation, the creation request includes a container cluster group creation request, and the creation response includes a container cluster group creation response; or the creation request includes a container cluster creation request, and the creation response includes a container cluster creation response; or the creation request includes a container cluster node creation request, and the creation response includes a container cluster node creation response.

In a possible implementation, that the CCM obtains storage resource description information includes: The CCM obtains the storage resource description information from a descriptor file of the container cluster object; or the CCM obtains the storage resource description information from a virtualized network function descriptor VNFD file.

In a possible implementation, before the CCM sends the resource allocation request to the VIM, the method further includes: The CCM sends a life cycle granting request to the CCM consumer, where the life cycle granting request is for applying for grant for life cycle management of the container cluster object, and the CCM consumer is an OSSBSS or an NFVO; and the CCM receives a life cycle granting response from the CCM consumer, where the life cycle granting response includes a granting indication, and the granting indication indicates that the CCM is allowed to initiate a life cycle management process of the container cluster object.

In the foregoing implementation, a container cluster life cycle management granting process is integrated into a container cluster storage resource management process, and storage resource allocation is initiated only when a CCM consumer indicates grant, to improve security.

According to a second aspect, an apparatus for managing storage resources of a container cluster is provided. The apparatus for managing storage resources of a container cluster is disposed in a CCM, and the apparatus for managing storage resources of a container cluster has a function of implementing any one of the first aspect or the optional manners of the first aspect. The apparatus for managing storage resources of a container cluster includes at least one unit, and the at least one unit is configured to implement the method provided in any one of the first aspect or the optional manners of the first aspect. The apparatus for managing storage resources of a container cluster is optionally deployed in a core network, and is configured to provide a service for a customer to manage a container cluster storage resource. In some embodiments, a unit in the apparatus for managing storage resources of a container cluster is implemented through software, and the unit in the apparatus for managing storage resources of a container cluster is a program module. In some other embodiments, a unit in the apparatus for managing storage resources of a container cluster is implemented by hardware or firmware. For specific details of the apparatus for managing storage resources of a container cluster provided in the second aspect, refer to the first aspect or any optional manner of the first aspect. Details are not described herein again.

According to a third aspect, a computing device is provided. The computing device includes a processor and a memory, where the memory stores computer instructions. The processor executes the computer instructions to implement the method in the first aspect and the possible implementations of the first aspect.

According to a fourth aspect, a (non-transient) computer-readable storage medium is provided. The (non-transient) computer-readable storage medium stores at least one instruction. When the instruction is run on a computer, the computer is enabled to perform the method provided in any one of the first aspect or the optional manners of the first aspect. Types of the storage medium include but are not limited to a volatile memory, for example, a random access memory, or a non-volatile memory, for example, a flash memory, a hard disk drive (hard disk drive, HDD), or a solid state drive (solid state drive, SSD).

According to a fifth aspect, a computer program product is provided. The computer program product includes one or more computer program instructions, and when the computer program instructions are loaded and executed by a computer, the computer is enabled to perform the method provided in any one of the first aspect or the optional manners of the first aspect.

According to a sixth aspect, a chip is provided, including a memory and a processor. The memory is configured to store computer instructions, and the processor is configured to invoke the computer instructions from the memory and run the computer instructions, to perform the method in any one of the first aspect or the possible implementations of the first aspect.

According to a seventh aspect, a network system is provided. The network system includes the apparatus for managing storage resources of a container cluster and the VIM that are provided in the second aspect.

### BRIEF DESCRIPTION OF DRAWINGS

FIG. 1 is an architectural diagram of an NFV system according to an embodiment of this application;
FIG. 2 is a schematic diagram of a container cluster hierarchical storage resource according to an embodiment of this application;
FIG. 3 is a flowchart of a method for managing storage resources of a container cluster according to an embodiment of this application;
FIG. 4 is a flowchart of a method for managing storage resources of a container cluster according to an embodiment of this application;
FIG. 5 is a flowchart of a method for managing storage resources of a container cluster according to an embodiment of this application;
FIG. 6 is a flowchart of a method for managing storage resources of a container cluster according to an embodiment of this application;
FIG. 7 is a flowchart of a method for managing storage resources of a container cluster according to an embodiment of this application;
FIG. 8 is a flowchart of a method for managing storage resources of a container cluster according to an embodiment of this application;
FIG. 9 is a schematic diagram of a structure of an apparatus for managing storage resources of a container cluster according to an embodiment of this application; and
FIG. 10 is a schematic diagram of a structure of a computing device according to an embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

### (a) Container cluster object

The container cluster objects are objects at different layers managed by the CCM, and the container cluster object includes at least one of a container cluster group, a container cluster, or a container cluster node. Three concepts, the container cluster group, the container cluster, and the container cluster node, are all related to the container cluster. Scopes of the concepts have a large-to-small inclusion relationship: One container cluster group includes one or more container clusters, and one container cluster includes one or more container cluster nodes. Optionally, the container cluster group may provide a function of a container cluster service for a network service (network service, NS), the container cluster may provide a function of a container cluster service for a virtualized network function (Virtualized Network Function, VNF), and the container cluster node may provide a function of a container cluster service for a virtualized network function component (Virtualized Network Function Component, VNFC).

### (b) Container cluster group

The container cluster group is a collection of a group of associated container clusters. For example, these container clusters are used by a same network service. The container cluster group is also referred to as a container infrastructure service (container infrastructure service, CIS) cluster group.

Correlation of different container clusters in the container cluster group includes a plurality of cases. For example, services supported by different container clusters in the container cluster group are related. For example, each container cluster in the container cluster group is used for a same service or a same type of service. For another example, each container cluster in the container cluster group is used by a same organization.

The container cluster group can be deployed in a plurality of modes. In a possible implementation, a deployment manner of the container cluster group is distributed deployment, to be specific, different container clusters in the container cluster group are deployed at different physical sites. In another possible implementation, a deployment manner of the container cluster group is centralized deployment, to be specific, different container clusters in the container cluster group are deployed at a same physical site.

### (c) Container cluster

The container cluster generally includes one or more monitoring management processes and one or more container cluster nodes. The container cluster is a dynamic system. A plurality of containers can be deployed in the system. The system can monitor statuses of these containers and communication between containers. In the ETSI standard, a concept corresponding to the container cluster is a container infrastructure service cluster (container infrastructure service cluster, CIS Cluster).

Optionally, a same container cluster does not include a hybrid (hybrid) deployment scenario in which a container cluster node based on a virtual machine and a container cluster node based on a bare machine are deployed, in other words, each container cluster node in a same container cluster is a virtual machine or each container cluster node in a same container cluster is a bare machine, so that ease of container cluster operations and maintenance management is ensured.

Optionally, specifications of computing resources or storage resources of all container cluster nodes in a same container cluster are the same. Alternatively, one container cluster includes container cluster nodes with different specifications of computing resources or different specifications of storage resources.

### (d) Container cluster node

The container cluster node is a computing node resource that can be used for deploying a container. One or more containers are deployed on one container cluster node.

The container cluster node may be a virtual node or a physical node. For example, the container cluster node is a virtual machine, a bare metal device (computer hardware without an operating system, also referred to as a bare machine), or another hardware device.

### (e) Container

A container is an operating-system-level virtualization technology. Different processes are isolated by using an operating system isolation technology, for example, a control group (control group, CGroup, which is a function of a Linux kernel and is used to limit, control, and separate resources of one process group) in Linux and namespace (namespace). The container technology is different from a hardware virtualization (Hypervisor) technology. Usually, the container does not have virtual hardware and there is no operating system but processes inside the container. By virtue of this important feature of the container technology, a container is more lightweight and easier to manage in comparison with a virtual machine. In a running state of a container, a group of common management operations are defined, such as starting, stopping, pausing, and deleting the container, to manage a life cycle of the container in a unified manner.

The container is also referred to as a container object. In the ETSI standard, a concept corresponding to the container is a managed container infrastructure object (managed container infrastructure object, MCIO).

Currently, network transformation in the telecommunications field undergoes a process of evolution from network function virtualization (Network Function Virtualization, NFV) to cloud-native (Cloud-Native). Cloud-native is a new system implementation paradigm for building, running, and managing software in a cloud environment. This fully uses a cloud infrastructure and a platform service, adapts to the cloud environment, and has an architecture practice of a key feature, for example, (micro) service-oriented, auto scaling, distributed, high availability, multi-tenant, automation and the like. In this transformation, introduction of container management within a reference architecture of NFV management and orchestration (Management and Orchestration, MANO) is a key part of a plurality of practices that move NFV to cloud-native.

Introduction of a container, that is, a service architecture, in a cloud-native evolution process of a telecommunications network brings agile reformation to development and operations (Development and Operations, DevOps) of a telecommunications industry. Correspondingly, a conventional large-granularity monolithic network function is gradually deconstructed and service-based, and even further microservice-based. Each service-based function is independently developed, delivered, and maintained, and upgrade of a version becomes more frequent. However, a surge of a quantity of containerized network functions does not lead to an exponential increase in workload of interoperability tests. A stable API interface definition ensures consistency and reliability of interface function invocation.

Currently, a most popular application in the container management and orchestration field is Google's Kubernetes (K8S for short) container cluster management technology based on an open-source platform. A core idea of Kubernetes is that "everything is service-centric and runs around services". Based on this idea, a container application system built on Kubernetes can independently run on physical machines, virtual machines, or enterprise private clouds, and can also be hosted on public clouds. Another feature of Kubernetes is automation. A service can be automatically scaled out/in, diagnosed, and easily upgraded.

The following uses an example to describe a system architecture in embodiments of this application.

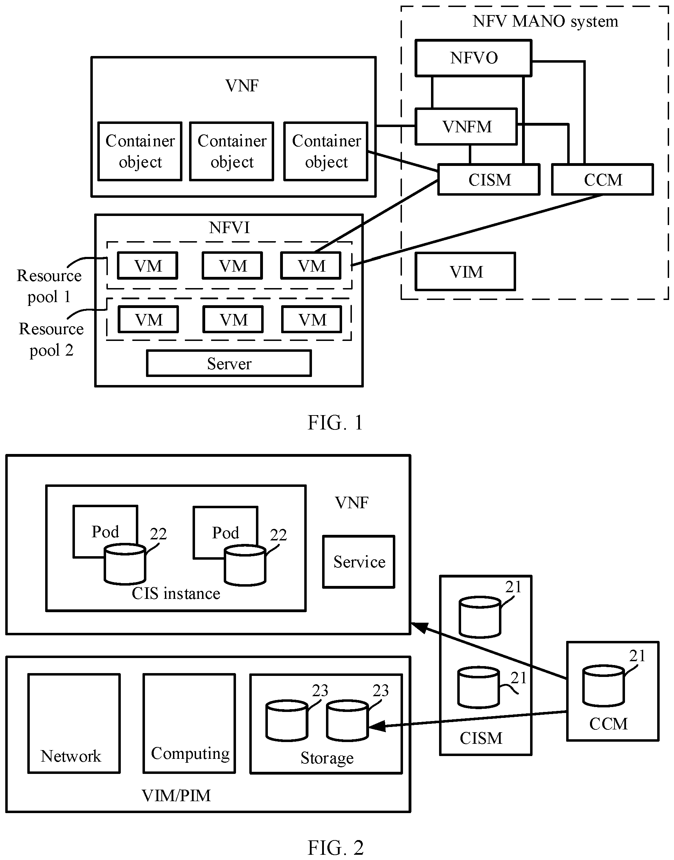

FIG. 1 is an architectural diagram of an NFV system according to an embodiment of this application. The NFV system includes an NFV MANO system, a VNF, and a network functions virtualization infrastructure (network functions virtualization infrastructure, NFVI). The NFV MANO system includes a CCM, container infrastructure service management (Container Infrastructure Service Management, CISM), network functions virtualization orchestrator (Network Functions Virtualization Orchestrator, NFVO), virtualized network function manager (Virtualized Network Function Manager, VNFM), and virtualized infrastructure manager (Virtualized Infrastructure Manager, VIM).

The CCM is responsible for managing a container cluster. Specifically, the CCM is configured to create a container cluster node resource pool, and perform capacity expansion and capacity reduction on the container cluster node resource pool. The container cluster node resource pool includes a plurality of container cluster nodes. For example, the container cluster node resource pool is a resource pool 1 and a resource pool 2 in FIG. 1. Container cluster nodes in the resource pool 1 and the resource pool 2 are all virtual machines (Virtualized Machines, VMs), and the capacity expansion is, for example, allocating a new VM to the resource pool 1 or the resource pool 2. The CCM is optionally a logical function, or hardware (for example, a computer) including a program.

CISM is also referred to as container as a service (Container as a Service, CaaS) management. An open-source prototype is Kubernetes. The CISM is responsible for managing a container object invoked by a containerized VNF, including creating, updating, and deleting the container object, and schedules the container object to a corresponding node resource (computing, storage, and network) in the container cluster node resource pool managed by the CISM.

The CISM and CCM provide a management service for the NFVO or VNFM over a northbound interface.

The VNF is specifically a containerized VNF. The VNF includes one or more container objects. The containerized VNF may be understood as containerized workload (containerized workload) that encapsulates an NFVI resource, for example, computing, storage, and network. A container object MCIO invoked by the workload is scheduled to a node of the container cluster for running, and an image of a CISM instance or an image of a CIS instance is loaded on the node of the container cluster. The CISM instance is used to provide a CaaS management plane function, for example, a master node (Master) in Kubernetes. The CIS instance is used to provide a CaaS user plane function, for example, kubelet, kube-proxy, and docker on a worker node (worker node) in Kubernetes. Kubelet is a component on a worker node, and is used to operate a docker container and maintain a life cycle of a pod. Kube-proxy is another component on the worker node, and is used for load balancing and communication between pods.

The VIM is used to manage (including reserving and allocating) virtual resources (including virtual computing, storage, and network resources) at an infrastructure layer, monitor statuses of virtual resources, report faults, and provide a virtual resource pool for an upper-layer application.

The VNFM is configured to perform life cycle management on one or more VNFs, for example, instantiation, update, auto scaling, and termination. Optionally, the VNFM communicates with the VNF to complete VNF life cycle management and exchange configuration and status information.

The NFVI is an infrastructure layer of the NFV, and includes a hardware component, a software component, or a combination of the two, to establish a virtualization environment, and deploy, manage, and implement the VNF. A hardware resource and a virtualization layer are used to provide a virtualized resource, for example, a virtual machine and a virtual container in another form, for the VNF. The hardware resource includes computing hardware, storage hardware, and network hardware. As an implementation, the computing hardware and the storage hardware may be integrated together. The virtualization layer in the NFVI may abstract the hardware resource, and decouple the VNF and an underlying physical network layer.

In some embodiments, the NFV system further includes an operation support system (Operation Support System, OSS) / business support system (Business Support System, BSS), and the OSSBSS is not shown in FIG. 2. The OSSBSS supports various end-to-end telecommunications services. A management function supported by the OSS includes network configuration, service provision, fault management, and the like. The BSS processes an order, payment, and the like, and supports product management, order management, revenue management, and customer management.

A storage resource in a container cluster is hierarchical (hierarchical), and includes a storage resource that applies to an entire container cluster, a storage resource that applies to a container cluster node, and a storage resource that applies to a container application MCIO/Pod. Specifically, FIG. 2 is a schematic diagram of a container cluster hierarchical structure storage resource. The container cluster includes the following types of hierarchical storage resources.

Cluster persistent volume (Persistent Volume, PV) 21 provides a persistent storage function in the container cluster, and has a life cycle that is independent of a container cluster node and is consistent with a life cycle of the container cluster. A persistent volume can provides a storage resource that is required for cluster CISM instance running, for example, an operating system (operating system, OS) partition, a data partition, an image repository partition, an etcd (a high-availability key-value storage system), and the like.

Ephemeral storage (ephemeral storage) 22 dedicated for a cluster node is consistent with a life cycle of the container cluster node, and dynamically created or deleted along with creation/deletion of the container cluster node (computing resource). The ephemeral storage may provide a storage resource that is required for running a CIS instance of the container cluster node, for example, an OS partition, a data partition, and the like.

Ephemeral storage 23 shared in a cluster is independent of a life cycle of the container cluster node, and shares common storage information between different container cluster nodes, for example, a storage resource that is required for running a CIS instance is shared.

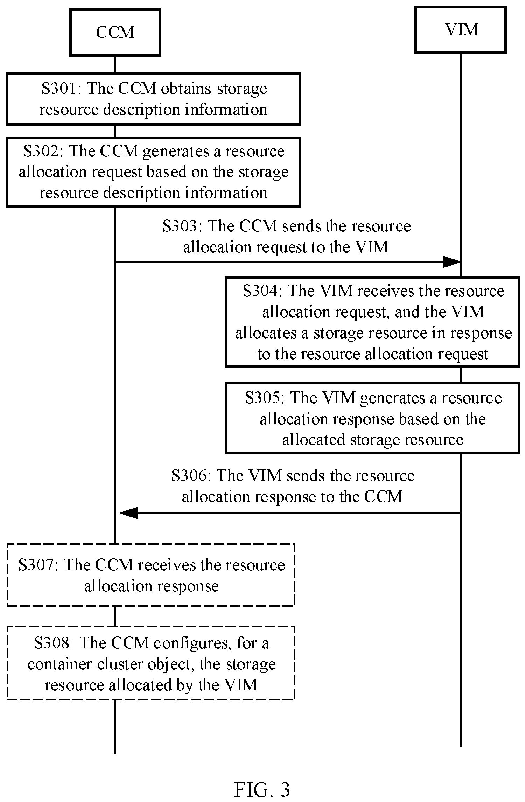

With reference to the foregoing storage resources of different types of hierarchical structures in the container cluster, this embodiment provides container cluster storage resource description (CIS cluster storage description) information, to implement a requirement for dynamically and elastically managing a container cluster storage resource by using a model-driven method in an embodiment process. For details, refer to the method shown in FIG. 3.

The following uses an example to describe a method procedure in an embodiment of this application.

FIG. 3 is a flowchart of a method for managing storage resources of a container cluster according to an embodiment of this application. The method shown in FIG. 3 includes the following step S301 to step S308.

A system architecture on which the method shown in FIG. 3 is based is optionally shown in FIG. 1. For example, with reference to FIG. 1, a CCM in the method shown in FIG. 3 is the CCM in FIG. 1, and a VIM in the method shown in FIG. 3 is the VIM in FIG. 1.

Step S301: The CCM obtains storage resource description information.

The storage resource description information is also referred to as a storage resource template or a storage resource descriptor file. The storage resource description information is used to describe a storage resource requirement of life cycle management of a container cluster object managed by the CCM. The storage resource description information includes one or more attributes of a storage resource. Specifically, the storage resource description information is equivalent to a template used to configure the storage resource. The template defines attributes that the storage resource needs to have during container cluster deployment and life cycle management. In a process of deploying a container cluster or a storage resource, the storage resource description information can be used to indicate a management plane entity (for example, the CCM in this embodiment) to perform a configuration operation or a management operation. Optionally, the storage resource description information is included in one file.

A source or a generation manner of the storage resource description information includes a plurality of cases. In a possible implementation, the storage resource description information is obtained by a container cluster provider through orchestration before the container cluster is deployed. An attribute included in the storage resource description information is set by the container cluster provider through a web interface, a command line, or in other methods. Optionally, the storage resource description information is a file, and the container cluster provider sends the storage resource description information to the CCM in a file uploading manner.

An occasion for obtaining the storage resource description information includes a plurality of cases. Optionally, the storage resource description information is preset in the CCM. Specifically, the CCM pre-stores the storage resource description information. When the CCM creates the container cluster object, the CCM obtains the pre-stored storage resource description information. Alternatively, the storage resource description information is obtained in a process of creating the container cluster object. Specifically, when the CCM needs to create the container cluster object, the CCM sends a request for obtaining the storage resource description information, and the CCM receives a returned obtaining response for the storage resource description information, where the obtaining response includes the storage resource description information. An occasion for the CCM to obtain the storage resource description information is not limited in this embodiment.

A specific manner of obtaining the storage resource description information includes a plurality of cases. In a possible implementation, the CCM obtains the storage resource description information from a descriptor of the container cluster object. For example, in a process of creating a container cluster group, the CCM obtains the storage resource description information from a descriptor of the container cluster group, to configure the storage resource required by the container cluster group. In a process of creating a container cluster, the CCM obtains the storage resource description information from a descriptor of the container cluster, to configure the storage resource required by the container cluster. In a process of creating a container cluster node, the CCM obtains the storage resource description information from a descriptor file of the container cluster node, to configure the storage resource required by the container cluster node. Alternatively, the CCM obtains the storage resource description information from a virtualized network function descriptor (Virtualized Network Function Descriptor, VNFD) file. A specific manner of obtaining the storage resource description information is not limited in this embodiment.

Step S302: The CCM generates a resource allocation request based on the storage resource description information.

The resource allocation request indicates the VIM to allocate a storage resource.

Optionally, the resource allocation request includes at least one attribute of the storage resource description information.

Step S303: The CCM sends the resource allocation request to the VIM.

Step S304: The VIM receives the resource allocation request from the CCM, and the VIM allocates the storage resource in response to the resource allocation request.

In a possible implementation, the VIM obtains an attribute of the storage resource from the resource allocation request. The VIM selects, from a resource pool, a storage resource that meets the attribute, and allocates the storage resource that meets the attribute.

Step S305: The VIM generates a resource allocation response based on the allocated storage resource.

Step S306: The VIM sends the resource allocation response to the CCM.

The resource allocation response indicates the storage resource already allocated by the VIM. The resource allocation response includes an identifier of the storage resource already allocated by the VIM.

Step S307: The CCM receives the resource allocation response from the VIM.

Step S308: The CCM configures, for the container cluster object, the storage resource already allocated by the VIM.

Specifically, the CCM obtains, from the resource allocation response, the identifier of the storage resource already allocated by the VIM. The CCM generates configuration information of the container cluster object based on the identifier of the storage resource in the resource allocation response and the storage resource description information, to configure the storage resource used by the container cluster object.

The configuration information includes a correspondence (also referred to as an association relationship or a binding relationship) between the storage resource and the container cluster object. For example, the configuration information includes the identifier of the storage resource and an identifier of the container cluster object. Optionally, the configuration information further includes an attribute in the storage resource description information.

Optionally, after the CCM generates the configuration information, the CCM saves the configuration information, to subsequently perform a life cycle management operation on the container cluster object based on the configuration information.

According to the method provided in this embodiment, the storage resource description information is provided, and the storage resource requirement of the container cluster managed by the CCM is defined in the storage resource description information. The CCM initiates a resource allocation procedure to the VIM based on the storage resource description information, to complete configuration of the container cluster storage resource that meets the requirement of the description information. The container cluster storage resource is managed in a model description (description) manner. Therefore, this helps flexibly deploy a storage policy of the container cluster, to perform differentiated deployment and configuration on storage resources at different layers in the container cluster, so that the container cluster storage resource dynamically and flexibly adapts to different network service requirements. Especially, the storage resource description information can be used as a template for creating and managing storage resources. The CCM can create a large quantity of storage resources in batches by copying an attribute included in same storage resource description information, without determining a corresponding attribute for each to-be-created storage resource. Therefore, time and effort are saved.

The following describes the attribute of the storage resource included in the storage resource description information. The storage resource description information optionally includes a plurality of attributes of the storage resource. To distinguish between different attributes, "first attribute", "second attribute", "third attribute", and the like are used to distinguish between and describe a plurality of different attributes.

### (1) First attribute of a storage resource

The first attribute indicates a layer of a container cluster object to which the storage resource is applicable. Optionally, the first attribute is an attribute of an enumeration type. A value of the first attribute includes at least one of a container cluster group, a container cluster, or a container cluster node. Among three container cluster objects, that is, the container cluster group, the container cluster, and the container cluster node, the container cluster group has a highest layer, followed by the container cluster, and the container cluster node has a lowest layer.

Optionally, the value of the first attribute is one of the container cluster group, the container cluster, and the container cluster node. If a value of a first attribute of one storage resource is a container cluster group, it represents that the storage resource is applicable to the container cluster group. If a value of a first attribute of one storage resource is a container cluster, it represents that the storage resource is applicable to the container cluster. If a value of a first attribute of one storage resource is a container cluster node, it represents that the storage resource is applicable to the container cluster node. Alternatively, the value of the first attribute includes a plurality of items of a container cluster group, a container cluster, and a container cluster node.

Optionally, the first attribute is an attribute of a persistent storage resource. Alternatively, the first attribute is an attribute of an ephemeral storage resource.

When the storage resource description information includes the first attribute, the configuration information generated by the CCM in step S308 further indicates a layer of the container cluster object to which the storage resource already allocated by the VIM is applicable. The configuration information includes a binding relationship between an identifier of the storage resource and a container cluster object of a corresponding layer. Specifically, if a value of a first attribute of one storage resource is a container cluster group, configuration information generated by the CCM includes a binding relationship between the storage resource and the container cluster group. Because the storage resource is bound to the container cluster group, the storage resource is allowed to be allocated to the container cluster group for use subsequently. Similarly, if a value of a first attribute of one storage resource is a container cluster, configuration information generated by the CCM includes a binding relationship between the storage resource and the container cluster. If a value of a first attribute of one storage resource is a container cluster node, configuration information generated by the CCM includes a binding relationship between the storage resource and the container cluster node.

In this embodiment, the first attribute is defined in the storage resource description information. This helps to perform differentiated deployment configuration on storage resources at different layers in the container cluster, and to deploy a storage policy of the container cluster more flexibly.

### (2) Second attribute of a storage resource

The second attribute indicates whether the storage resource is statically provided or dynamically allocated. Optionally, the second attribute is an attribute of a Boolean type. To be specific, there are two types of values of the second attribute. One type represents static provision, and the other type represents dynamic allocation.

Statically providing a storage resource is that a storage resource is allocated before a container cluster object is created. If a value of a second attribute of one storage resource is the static provision, a process of allocating the storage resource is separated from a creation process of a container cluster object, and the storage resource is pre-allocated before the container cluster object is created. The static provision, the value of the attribute, is defined in the description information, to support storage resource planning and deployment in advance.

Dynamically allocating a storage resource is that a storage resource is allocated in a creation process of a container cluster object. If a value of a second attribute of one storage resource is the dynamic allocation, the storage resource is allocated in life cycle management of a container cluster object to which the storage resource belongs. For example, the storage resource is created along with creation of the container cluster object, and the storage resource is deleted along with deletion of the container cluster object.

In some embodiments, the second attribute is used by the CCM to determine an occasion for initiating a storage resource allocation procedure. Specifically, after the CCM obtains the storage resource description information, the CCM obtains the second attribute from the storage resource description information. The CCM determines whether the value of the second attribute is the static provision or the dynamic allocation. If the value of the second attribute is the dynamic provision, when receiving a container cluster object creation request, the CCM performs the step of generating and sending a resource allocation request to the VIM (in other words, the step S302 and the step S303). If the value of the second attribute is the static allocation, the CCM is allowed to first create the storage resource, and then subsequently initiate a creation process of a container cluster object. In the creation process of the container cluster object, the CCM allocates the storage resource to the container cluster for use.

Optionally, the second attribute is an attribute of a persistent storage resource.

In this embodiment, the second attribute is defined in the storage resource description information. In this way, space for selection can be provided for a user in a deployment process of the container cluster object, to be specific, the storage resource is planned for deployment or the storage resource is subsequently deployed in the creation process of the container cluster object, so that the solution is more flexible, and is more applicable to a dynamically changing requirement.

### (3) Third attribute of a storage resource

The third attribute is equivalent to providing a constraint condition for a physical range in which the storage resource is located, and the third attribute is used to support isolation of different storage resources in a physical range. The third attribute is used to describe an affinity rule or an anti-affinity rule that the storage resource needs to meet. The affinity rule is that physical ranges in which different storage resources are located are same or similar, and the anti-affinity rule is that physical ranges in which different storage resources are located are different or not similar. The physical range includes but is not limited to an NFVI-PoP (site), a zone (zone), a zone group (zone group), an NFVI-node (host), or the like.

For example, the physical range is a host. Storage resources that need to be created include a first storage resource and a second storage resource, and both the first storage resource and the second storage resource are memory resources. If the third attribute indicates that the first storage resource and the second storage resource need to meet the affinity rule, two memory resources on a same host are selected and configured as the first storage resource and the second storage resource respectively. If the third attribute indicates that the first storage resource and the second storage resource need to meet the anti-affinity rule, two memory resources on different hosts are selected and configured as the first storage resource and the second storage resource respectively.

Optionally, the third attribute of the storage resource is the same as an affinity rule or an anti-affinity rule of a container cluster node bound to the storage resource. In other words, a container cluster node storage resource multiplexes the affinity rule or the anti-affinity rule of the container cluster node. Specifically, when the third attribute is an affinity rule, the container cluster node storage resource and the container cluster node use a same affinity rule during deployment; or when the third attribute is an anti-affinity rule, the container cluster node storage resource and the container cluster node use a same anti-affinity rule during deployment. Optionally, the third attribute of the storage resource includes only a container cluster resource isolation requirement within a physical range.

Optionally, the third attribute is an attribute of an ephemeral storage resource. Optionally, an ephemeral storage resource dedicated to the container cluster node multiplexes the affinity rule or the anti-affinity rule of the container cluster node. In other words, the dedicated storage resource of the container cluster node has the third attribute, and the third attribute of the dedicated storage resource of the container cluster node is the same as the affinity rule or the anti-affinity rule of the container cluster node. Alternatively, the third attribute is an attribute of a persistent storage resource.

How to ensure that a configured storage resource meets the third attribute includes a plurality of specific implementations. The following uses an implementation 1 and an implementation 2 as examples for description.

Implementation 1: The CCM determines a physical range of a storage resource based on an affinity rule or an anti-affinity rule specified by the third attribute.

Specifically, when the CCM senses a physical range of each storage resource at an infrastructure layer, the CCM determines, based on the affinity rule or the anti-affinity rule specified by the third attribute, a physical range of a storage resource that is to be created. The CCM includes the determined physical range in a resource allocation request, and the CCM sends the resource allocation request that includes the physical range to the VIM. After the VIM receives the resource allocation request, the VIM obtains a physical range specified by the CCM from the resource allocation request. The VIM selects and allocates a storage resource in the physical range.

Implementation 2: The VIM determines a physical range of a storage resource based on an affinity rule or an anti-affinity rule specified by the third attribute.

Specifically, the CCM includes the third attribute in a resource allocation request, and the CCM sends the resource allocation request that includes the third attribute to the VIM. After the VIM receives the resource allocation request, the VIM obtains the third attribute from the resource allocation request. The VIM determines, based on the affinity rule or the anti-affinity rule specified by the third attribute, a physical range of a storage resource that is to be created. The VIM selects and allocates a storage resource in the physical range.

### (4) Fourth attribute of a storage resource

The fourth attribute is used to describe whether the storage resource is a persistent storage (persistent storage) resource or an ephemeral storage (ephemeral storage) resource.

The persistent storage resource is, for example, one or more hard disks or one or more hard disk arrays (for example, hard disk enclosures). The hard disk is, for example, a solid state disk (solid state disk, SSD), a hard disk drive (hard disk drive, HDD) or the like.

A persistent storage resource is also referred to as a persistent volume (persistent volume, PV). The persistent storage resource is used to provide a persistent storage function for a container cluster object. For example, a container cluster persistent storage resource (also referred to as a cluster persistent volume) is used to provide a persistent storage function in the container cluster. The container cluster persistent storage resource has a life cycle that is independent of a container cluster node and consistent with a life cycle of the container cluster, and can provide a storage resource that is required for running a cluster CISM instance, for example, an OS partition, a data partition, an image repository partition, an etcd, and the like.

A layer of a container cluster object to which the persistent storage resource is applicable includes but is not limited to a container cluster group, a container cluster, or a container cluster node. In other words, a value of a first attribute in storage resource description information of the persistent storage resource is any one of the container cluster group, the container cluster, or the container cluster node. Optionally, the persistent storage resource and a container cluster object at a layer to which the persistent storage resource is applicable have a same life cycle. For example, a life cycle of the container cluster persistent storage resource is the same as a life cycle of the container cluster.

A layer of a container cluster object to which an ephemeral storage resource is applicable is a container cluster node. In other words, a value of a first attribute in storage resource description information of the ephemeral storage resource is the container cluster node. The storage resource description information of the ephemeral storage resource is obtained from description information of a container cluster node to which the ephemeral storage resource belongs. A life cycle of the ephemeral storage resource is the same as a life cycle of the container cluster node to which the ephemeral storage resource belongs.

The ephemeral storage resource is a storage resource of dynamic allocation. In other words, a value of a second attribute in the storage resource description information of the ephemeral storage resource is the dynamic allocation. The ephemeral storage resource is created along with creation of the container cluster node (a computing resource), and is deleted along with deletion of the container cluster node. The ephemeral storage resource can provide storage that is required for running a container cluster node CIS instance, for example, an OS partition, a data partition, and the like. The ephemeral storage resource is also referred to as an ephemeral volume.

The ephemeral storage resource is, for example, a memory resource. Usually, in two types of storage resources: the ephemeral storage resource and the persistent storage resource, a physical range of the ephemeral storage resource is closer to a CPU, and the ephemeral storage resource is used to provide the CPU with a faster access speed than the persistent storage resource.

Optionally, in three types of resources (in a computing resource, a storage resource, and a network resource) in a cloud infrastructure, the persistent storage resource belongs to the storage resource, and the ephemeral storage resource belongs to the computing resource. In a process of creating the persistent storage resource, the resource allocation request in step S302 and step S303 is specifically a virtual storage resource allocation request, and the resource allocation response in step S305 and step S306 is specifically a virtual storage resource allocation response. In a process of creating the ephemeral storage resource, the resource allocation request in step S302 and step S303 is specifically a virtual computing resource allocation request, and the resource allocation response in step S305 and step S306 is specifically a virtual computing resource allocation response.

### (5) Fifth attribute of a storage resource

The fifth attribute is used to describe whether the storage resource is a dedicated storage resource or a shared storage resource.

The dedicated storage resource is a storage resource that is allowed to be used only by a specific sub-object in a container cluster object. The specific sub-object is a specified sub-object in the container cluster object. For example, the container cluster object is a container cluster, and the specific sub-object is a specified container cluster node in the container cluster. For another example, the container cluster object is a container cluster group, and the specific sub-object is a specified container cluster in the container cluster group. If a fifth attribute of one storage resource is a specific storage resource, it represents that the storage resource is a storage resource dedicated to or exclusively occupied by a specific sub-object.

The shared storage resource is a storage resource that allows each sub-object of a plurality of sub-objects in a container cluster object to share. For example, a shared storage resource of one container cluster is a storage rule resource that allows different container cluster nodes in the container cluster to share, for example, share storage that is required for running a CIS instance.

### (6) Sixth attribute of a storage resource

The sixth attribute includes at least one of a name of the storage resource, a specification (also referred to as a resource magnitude or size) of the storage resource, and description information of a virtual link connected to the storage resource. The sixth attribute is also referred to as a meta-data (meta-data) description or a basic attribute of a storage resource. Optionally, the name of the storage resource is specifically a type name of the storage resource. Optionally, the sixth attribute of the container cluster persistent storage resource further includes identification information or address information of a CISM image file and/or a CIS image file associated with the container cluster, and the like.

In some embodiments, the resource allocation request in the method shown in FIG. 3 includes the sixth attribute. Specifically, in a process in which the CCM performs step S302, the CCM obtains the sixth attribute of the storage resource from the storage resource description information, and the CCM includes the sixth attribute of the storage resource in the resource allocation request. The CCM sends a resource allocation request including the sixth attribute to the VIM. In a process of performing step S304, the CIM allocates the storage resource based on the sixth attribute. For example, the sixth attribute is the specification of the storage resource. For example, the specification of the storage resource in the storage resource description information is 500 MB. When the CCM initiates a resource allocation procedure to the VIM based on the storage resource description information, the CCM includes 500 MB in a resource allocation request. After the VIM receives the resource allocation request, the VIM selects and allocates a storage resource whose specification is 500 MB from the resource pool.

The foregoing lists various attributes that can be included in the storage resource description information. Optionally, the storage resource description information includes all attributes listed in (1) to (6). Alternatively, the storage resource description information includes a part of attributes in (1) to (6).

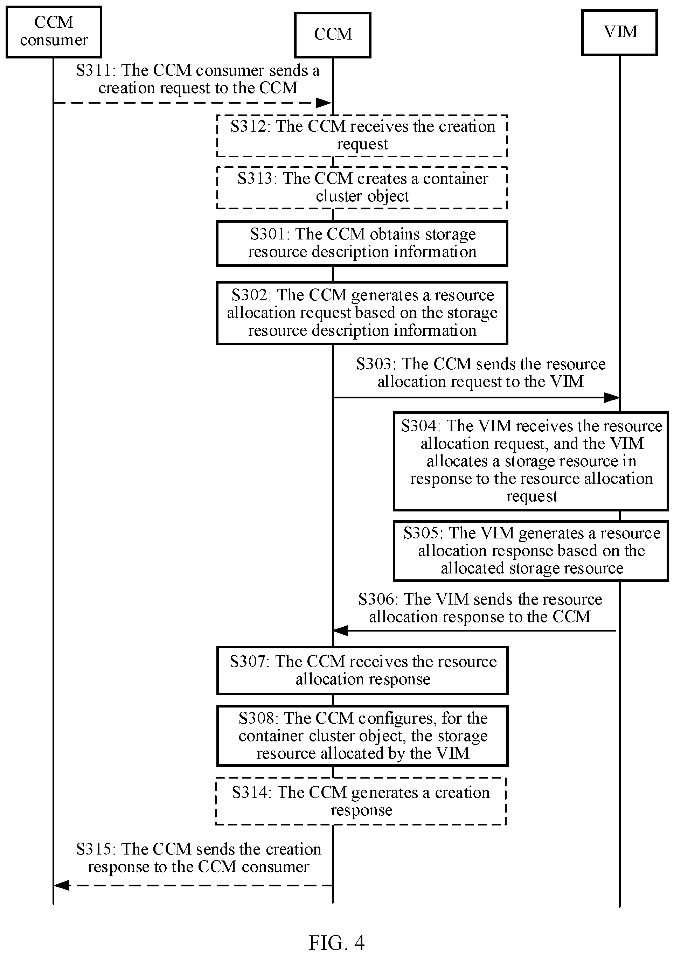

Optionally, the method shown in FIG. 3 is performed in a process of creating a container cluster object. Specifically, FIG. 4 is a flowchart of a method for managing storage resources of a container cluster according to an embodiment of this application. In addition to all steps in FIG. 3, FIG. 4 further includes the following step S311 to step S315. For other steps other than step S311 to step S315 in FIG. 4, refer to the descriptions of FIG. 3. Optionally, step S311 to step S313 are performed before step S301, and step S314 and step S315 are performed after step S308. Optionally, the method shown in FIG. 4 is applicable to a case in which a value of the second attribute in the storage resource description information is dynamic allocation.

Step S311: The CCM consumer sends a creation request to the CCM.

Consumption is a use of the container cluster management service. Specifically, the CCM is a provider of a container cluster management service, and a CCM consumer (CCM consumer) is a user of the container cluster management service provided by the CCM. The CCM consumer is, for example, an OSSBSS or an NFVO.

The creation request indicates the CCM to create a container cluster object. The creation request sent by the CCM consumer is equivalent to a trigger condition for the CCM to initiate a resource allocation procedure to the VIM. When receiving the creation request, the CCM configures, based on the creation of the container cluster object, a storage resource for the created container cluster object according to the method shown in FIG. 3.

Optionally, the creation request includes an identifier of the description information of the container cluster object. A specific process of step S301 includes: The CCM obtains the identifier of the description information of the container cluster object from the creation request; the CCM accesses the description information of the container cluster object based on the identifier of the description information of the container cluster object in the creation request; and the CCM obtains the storage resource description information from the description information of the container cluster object.

Step S312: The CCM receives the creation request from the CCM consumer.

Step S313: The CCM creates the container cluster object.

Step S314: The CCM generates a creation response.

Step S315: The CCM sends the creation response to the CCM consumer.

The creation response includes a creation success indication. The creation success indication indicates that the container cluster object has been successfully created. Optionally, the creation response further includes an identifier of the container cluster object.

Optionally, the creation request initiated by the CCM consumer is a container cluster group creation request, and the container cluster group creation request indicates the CCM to create the container cluster group. The container cluster object created by the CCM is specifically a container cluster group. The creation response returned by the CCM is specifically a container cluster group creation response. The creation success indication in the container cluster group creation response indicates that the container cluster group has been successfully created.

Optionally, the creation request initiated by the CCM consumer is a container cluster creation request, and the container cluster creation request indicates the CCM to create the container cluster. The container cluster object created by the CCM is specifically a container cluster. The creation response returned by the CCM is specifically a container cluster creation response. The creation success indication in the container cluster creation response indicates that the container cluster has been successfully created.

Optionally, the creation request initiated by the CCM consumer is a container cluster node creation request, and the container cluster node creation request indicates the CCM to create the container cluster node. The container cluster object created by the CCM is specifically a container cluster node. The creation response returned by the CCM is specifically a container cluster node creation response. The creation success indication in the container cluster node creation response indicates that the container cluster node has been successfully created.

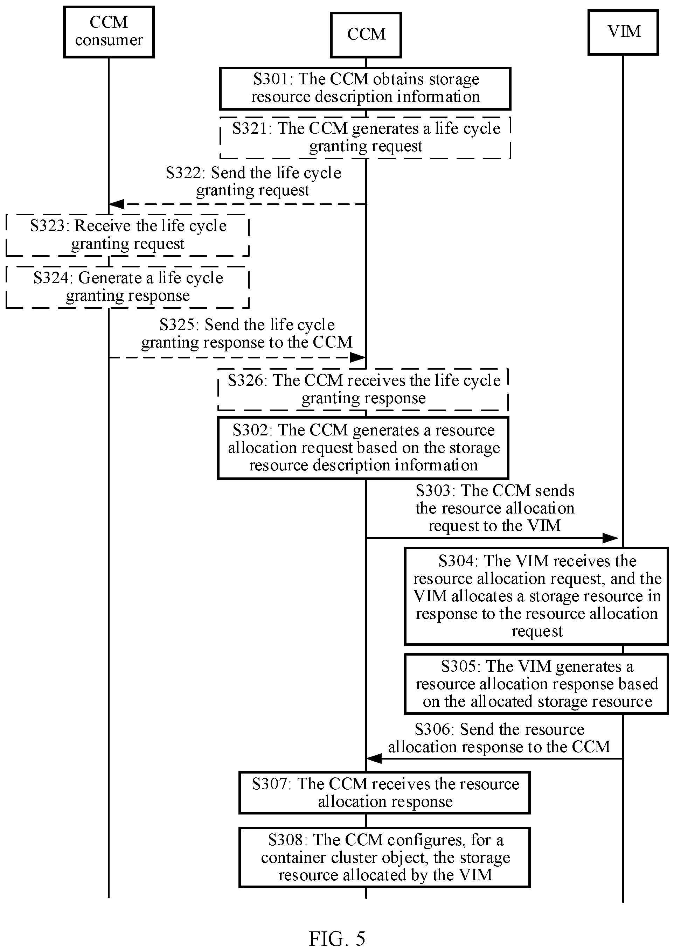

Optionally, the method shown in FIG. 3 further includes a container cluster life cycle management (Life Cycle Management, LCM) granting process. Specifically, FIG. 5 is a flowchart of a method for managing storage resources of a container cluster according to an embodiment of this application. In addition to all steps in FIG. 3, FIG. 5 further includes the following step S321 to step S326. For other steps other than step S321 to step S326 in FIG. 5, refer to the descriptions of FIG. 3. Optionally, step S321 to step S326 are performed before step S302.

Step S321: The CCM generates a life cycle granting request.

The life cycle granting request is used to apply for grant for life cycle management of the container cluster object. Optionally, the life cycle granting request includes an identifier of the storage resource description information.

Step S322: The CCM sends the life cycle granting request to a CCM consumer.

Step S323: The CCM consumer receives the life cycle granting request from the CCM.

Step S324: The CCM consumer generates a life cycle granting response.

Specifically, the CCM consumer determines whether the CCM is granted to initiate a life cycle management process of the container cluster object. If the CCM consumer grants the CCM to initiate the life cycle management process of the container cluster object, the CCM consumer includes a granting indication in the life cycle granting response. If the CCM consumer rejects the life cycle management process of the container cluster object that is initiated by the CCM, the CCM consumer includes a rejection indication in the life cycle granting response. The granting indication indicates that the CCM is allowed to initiate the life cycle management process of the container cluster object. The rejection indication indicates that the CCM is rejected to initiate the life cycle management process of the container cluster object.

Step S325: The CCM consumer sends the life cycle granting response to the CCM.

Step S326: The CCM receives the life cycle granting response from the CCM consumer.

The CCM determines whether an indication carried in the life cycle granting response is a granting indication or a rejection indication. If the life cycle granting response carries the granting indication, which is equivalent to obtaining authorization of the CCM consumer, the CCM performs step S302 in the method shown in FIG. 3 to initiate a procedure of requesting the VIM to allocate the storage resource. If the life cycle granting response carries the rejection indication, the CCM cancels performing a procedure of requesting the VIM to allocate the storage resource.

The following describes the method shown in FIG. 3 by using examples with reference to three instances.

### Instance 1

The instance 1 is for creating a container cluster group storage resource. The container cluster group in the instance 1 is the container cluster object in the method shown in FIG. 3. A value of a second attribute of the storage resource in the instance 1 is dynamic allocation.

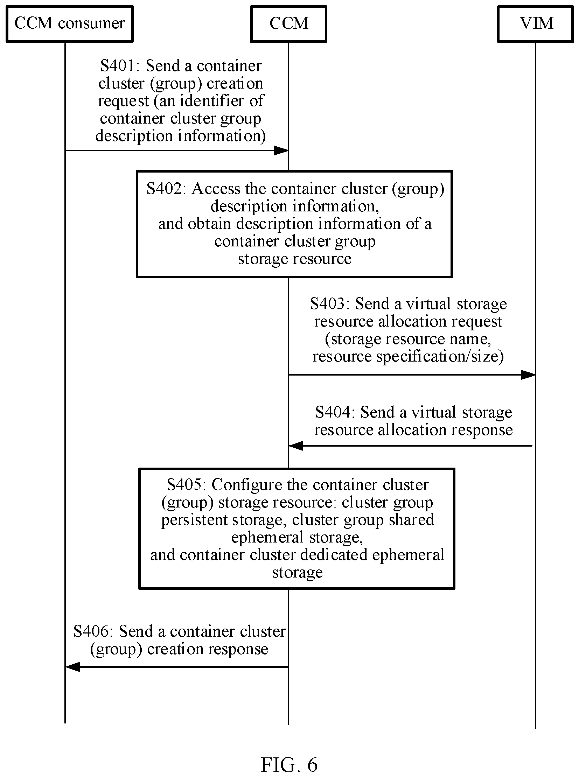

As shown in FIG. 6, the instance 1 includes step S401 to step S406.

Step S401: A CCM consumer sends a container cluster group creation request to a CCM. The container cluster group creation request carries an identifier of description information of a container cluster group that is to be created.

Step S402: The CCM accesses the description information of the container cluster group based on the identifier of the description information of the container cluster group, and the CCM obtains description information of a container cluster group storage resource from the description information of the container cluster group.

Step S403: The CCM sends a virtual storage resource allocation request to a VIM. The virtual storage resource allocation request carries information, for example, a name and a resource specification/size of a storage resource that is to be created. The information carried in the virtual storage resource allocation request is from the description information of the container cluster group storage resource.

Step S404: The VIM allocates a corresponding storage resource in a virtual storage resource managed by the VIM, based on information, for example, the name and the resource specification/size of the resource that is to be created, and the VIM returns a virtual storage resource allocation response to the CCM.

Step S405: The CCM further locally configures container cluster group storage resource information, including information about a container cluster group persistent storage resource, information about an ephemeral storage resource shared by the container cluster group, and information about an ephemeral storage resource dedicated to a container cluster.

Step S406: The CCM returns a container cluster group creation response to the CCM consumer, and the container cluster group creation response carries a creation success indication.

### Instance 2

The instance 2 is for creating a container cluster storage resource. A container cluster in the instance 2 is the container cluster object in the method shown in FIG. 3. A value of a second attribute of the storage resource in the instance 2 is dynamic allocation.

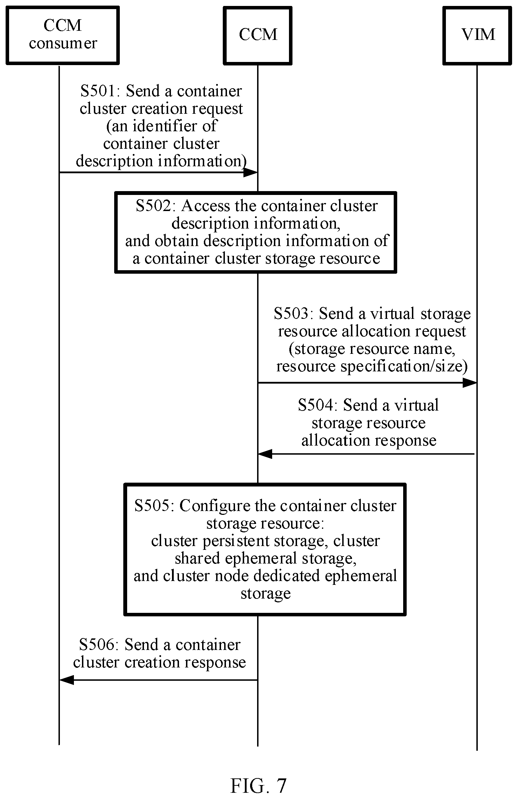

As shown in FIG. 7, the instance 2 includes step S501 to step S506.

Step S501: A CCM consumer sends a container cluster creation request to a CCM. The container cluster creation request carries an identifier of description information of a container cluster that is to be created.

Step S502: The CCM accesses the description information of the container cluster based on the identifier of the description information of the container cluster, and the CCM obtains description information of a container cluster storage resource from the description information of the container cluster.

Step S503: The CCM sends a virtual storage resource allocation request to a VIM. The virtual storage resource allocation request carries information, for example, a name and a resource specification/size of a storage resource that is to be created. The information carried in the virtual storage resource allocation request is from the description information of the container cluster storage resource.

Step S504: The VIM allocates a corresponding storage resource in a virtual storage resource managed by the VIM, based on information, for example, the name and the resource specification/size of the resource that is to be created, and the VIM returns a virtual storage resource allocation response to the CCM.

Step S505: The CCM further locally configures container cluster storage resource information, including information about a container cluster persistent storage resource, information about an ephemeral storage resource shared by the container cluster, and an ephemeral storage resource, an ephemeral volume, dedicated to a container cluster node.

Step S506: The CCM returns a container cluster creation response to the CCM consumer, and the container cluster creation response carries a creation success indication.

### Instance 3

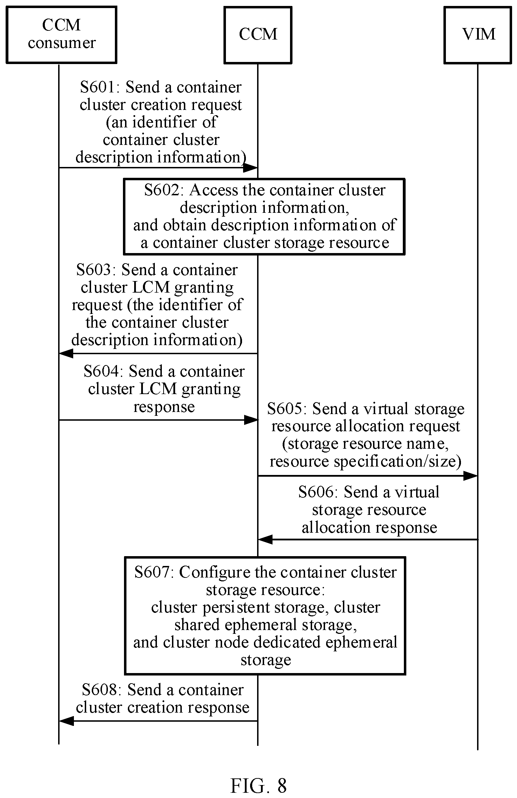

The instance 3 adds a container cluster life cycle management granting process based on the instance 2, so that the container cluster life cycle management granting process is integrated into a container cluster storage resource management process. A procedure of the instance 3 is shown in FIG. 8. The container cluster life cycle management granting process includes the following step S603 and step S604. For other steps other than step S603 and step S604 in FIG. 8, refer to the descriptions of the instance 2.

Step S603: Before the CCM initiates the virtual storage resource allocation request to the VIM, the CCM first initiates a container cluster life cycle management granting request to a CCM consumer, and the life cycle management granting request carries an identifier of description information of a to-be-created container cluster storage resource.

Step S604: The CCM consumer accesses storage resource description in container cluster description information based on the identifier of the container cluster storage resource description information, and determines whether the life cycle management operation is granted in a management domain of the CCM consumer. The CCM consumer returns a container cluster life cycle management granting response to the CCM, and the life cycle management granting response carries an indication of allowing or rejecting the life cycle management operation.

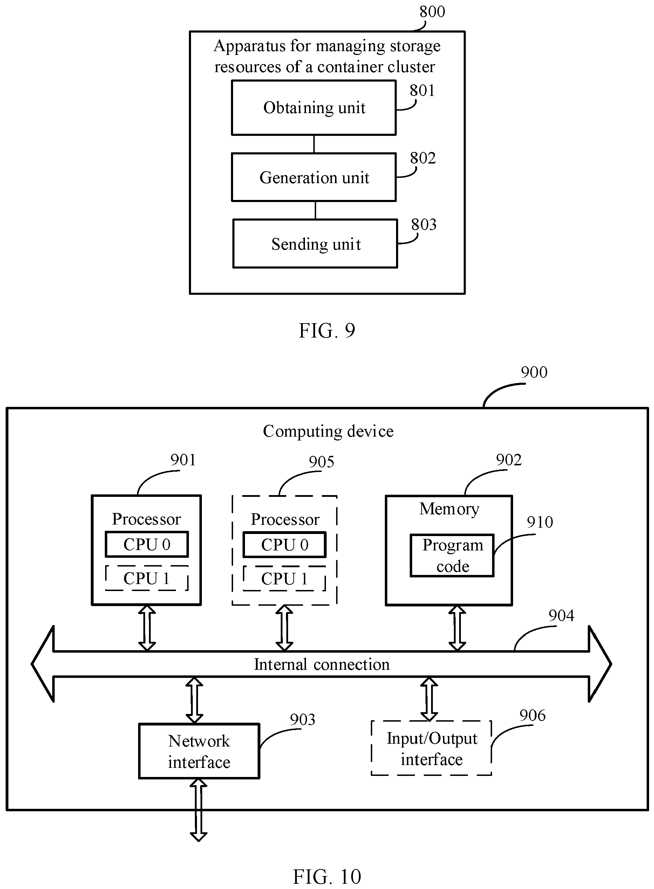

FIG. 9 is a schematic diagram of a structure of an apparatus for managing storage resources of a container cluster according to an embodiment of this application. The apparatus 800 shown in FIG. 9 is disposed in a CCM. The apparatus 800 includes an obtaining unit 801, a generation unit 802, and a sending unit 803. Optionally, the apparatus 800 further includes a receiving unit, a creating unit, and a configuring unit.

Optionally, with reference to FIG. 1, the apparatus 800 shown in FIG. 9 is disposed in the CCM in FIG. 1.

Optionally, with reference to FIG. 2, the apparatus 800 shown in FIG. 9 is disposed in the CCM in FIG. 2.

Optionally, with reference to FIG. 3, the apparatus 800 shown in FIG. 9 is disposed in the CCM shown in FIG. 3. The obtaining unit 801 is configured to support the apparatus 800 in performing S301, the generation unit 802 is configured to support the apparatus 800 in performing S302, and the sending unit 803 is configured to support the apparatus 800 in performing S303. The receiving unit is configured to support the apparatus 800 in performing S307. The configuring unit is configured to support the apparatus 800 in performing S308.

Optionally, with reference to FIG. 4, the receiving unit is configured to support the apparatus 800 in performing S312. The creating unit is configured to support the apparatus 800 in performing S313.

Optionally, with reference to FIG. 5, the generation unit 802 is configured to support the apparatus 800 in performing S321. The sending unit 803 is configured to support the apparatus 800 in performing S322, and the receiving unit is configured to support the apparatus 800 in performing S326.

Optionally, with reference to FIG. 6, the obtaining unit 801 is configured to support the apparatus 800 in performing S402. The sending unit 803 is configured to support the apparatus 800 in performing S403.

Optionally, with reference to FIG. 7, the obtaining unit 801 is configured to support the apparatus 800 in performing S502. The sending unit 803 is configured to support the apparatus 800 in performing S503.

Optionally, with reference to FIG. 8, the obtaining unit 801 is configured to support the apparatus 800 in performing S602. The sending unit 803 is configured to support the apparatus 800 in performing S603.

The apparatus embodiment described in FIG. 9 is merely an example. For example, division into the units is merely logical function division and may be other division in an actual implementation. For example, a plurality of units or components may be combined or integrated into another system, or some features may be ignored or not performed. Functional units in embodiments of this application may be integrated into one processing unit, or each of the units may exist alone physically, or two or more units are integrated into one unit.

All or some of the units in the apparatus 800 are implemented by using software, hardware, firmware, or any combination thereof.

When software is used for implementation, for example, the generation unit 802 and the creating unit are implemented by a software functional unit generated after at least one processor 901 in FIG. 10 reads program code stored in a memory 902.

When hardware is used for implementation, for example, the foregoing each unit in FIG. 9 is separately implemented by different hardware in a computing device. For example, the generation unit 802 is implemented by a part of processing resources (for example, one core or two cores in a multi-core processor) in at least one processor 901 in FIG. 10, and the creating unit is implemented by a remaining part of processing resources (for example, another core in the multi-core processor) in the at least one processor 901 in FIG. 10, or by using a programmable device, for example, a field programmable gate array (field-programmable gate array, FPGA), a coprocessor, or the like. The obtaining unit 801 and the sending unit 803 are implemented by a network interface 903 in FIG. 10.

When a combination of software and hardware is used for implementation, for example, the generation unit 802 is implemented by a hardware programmable device, and the creating unit is a software functional unit generated after a CPU reads program code stored in a memory.

The following describes, by using an example, a basic hardware structure for implementing the CCM.

FIG. 10 is a schematic diagram of a structure of a computing device according to an embodiment of this application. A CCM is disposed on the computing device 900 shown in FIG. 10.

Optionally, with reference to FIG. 1, the computing device 900 shown in FIG. 10 is provided with the CCM in FIG. 1.

Optionally, with reference to FIG. 2, the computing device 900 shown in FIG. 10 is provided with the CCM in FIG. 2.

Optionally, with reference to FIG. 3, the computing device 900 shown in FIG. 10 is configured to perform the steps that the CCM in FIG. 3 is responsible for performing.

The computing device 900 includes at least one processor 901, a memory 902, and at least one network interface 903.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

The memory 902 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can carry or store expected program code in a form of an instruction structure or a data structure and that can be accessed by a computer. However, the memory 902 is not limited thereto. Optionally, the memory 902 exists independently, and is connected to the processor 901 through an internal connection 904. Alternatively, optionally, the memory 902 and the processor 901 are integrated together.

The network interface 903 uses any apparatus, for example, a transceiver, and is configured to communicate with another device or communication network. The network interface 903 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, a combination thereof, or the like.

In some embodiments, the processor 901 includes one or more CPUs, such as a CPU 0 and a CPU 1 shown in FIG. 10.

In some embodiments, the computing device 900 optionally includes a plurality of processors, such as the processor 901 and a processor 905 shown in FIG. 10. Each of these processors is, for example, a single-core processor (single-CPU), or a multi-core processor (multi-CPU). The processor herein optionally is one or more devices, circuits, and/or processing cores configured to process data (for example, computer program instructions).

In some embodiments, the computing device 900 further includes the internal connection 904. The processor 901, the memory 902, and the at least one network interface 903 are connected through the internal connection 904. The internal connection 904 includes a path for transferring information between the foregoing components. Optionally, the internal connection 904 is a board or a bus. Optionally, the internal connection 904 is classified into an address bus, a data bus, a control bus, and the like.

In some embodiments, the computing device 900 further includes an input/output interface 906. The input/output interface 906 is connected to the internal connection 904.

Optionally, the processor 901 implements the method in the foregoing embodiment by reading program code 910 stored in the memory 902, or the processor 901 implements the method in the foregoing embodiment by using program code stored internally. When the processor 901 implements the method in the foregoing embodiment by reading the program code 910 stored in the memory 902, the memory 902 stores program code for implementing the method for managing a storage resource of a container cluster provided in embodiments of this application.

For more details about implementing the foregoing function by the processor 901, refer to the descriptions in the foregoing method embodiments. Details are not described herein again.

Each embodiment in this specification is described in a progressive manner. For same or similar parts in each embodiment, reference may be made to each other. Each embodiment focuses on a difference from other embodiments.

A refers to B, which is that A is the same as B or A is a simple variant of B.

In the specification and claims in embodiments of this application, the terms "first", "second", and the like are intended to distinguish between different objects but do not indicate a particular order of the objects, and cannot be understood as an indication or implication of relative importance. For example, a first attribute and a second attribute are used to distinguish between different attributes, but are not used to describe a specific order of the attributes. It cannot be understood that the first attribute is more important than the second attribute.

In embodiments of this application, unless otherwise specified, "at least one" means one or more, and "a plurality of" means two or more. For example, a plurality of attributes means two or more attributes.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for managing storage resources of a container cluster, wherein the method comprises:
obtaining, by a container cluster management CCM, storage resource description information, wherein the storage resource description information is used to describe a storage resource requirement of a container cluster object managed by the CCM, and the container cluster object comprises at least one of a container cluster group, a container cluster, or a container cluster node;
generating, by the CCM, a resource allocation request based on the storage resource description information, wherein the resource allocation request indicates a virtualized infrastructure manager VIM to allocate a storage resource; and
sending, by the CCM, the resource allocation request to the VIM.

2. The method according to claim 1, wherein the storage resource description information comprises a first attribute of the storage resource, and the first attribute indicates a layer of a container cluster object to which the storage resource is applicable.

3. The method according to claim 1 or 2, wherein the storage resource description information comprises a second attribute of the storage resource, the second attribute indicates whether the storage resource is statically provided or dynamically allocated, the statically providing the storage resource is that the storage resource is allocated before the container cluster object is created, and the dynamically allocating the storage resource is that the storage resource is allocated in a creation process of the container cluster object.

4. The method according to any one of claims 1 to 3, wherein the storage resource description information comprises a third attribute of the storage resource, and the third attribute is used to describe an affinity rule or an anti-affinity rule that the storage resource needs to meet.

5. The method according to any one of claims 1 to 4, wherein the storage resource description information comprises a fourth attribute of the storage resource, and the fourth attribute is used to describe whether the storage resource is a persistent storage resource or an ephemeral storage resource.

6. The method according to any one of claims 1 to 5, wherein the storage resource description information comprises a fifth attribute of the storage resource, the fifth attribute is used to describe whether the storage resource is a dedicated storage resource or a shared storage resource, wherein the dedicated storage resource is a storage resource that is allowed to be used only by a specific sub-object in the container cluster object, and the shared storage resource is a storage resource that is allowed to be used by each sub-object in a plurality of sub-objects in the container cluster object.

7. The method according to any one of claims 1 to 6, wherein the storage resource description information comprises a sixth attribute of the storage resource, and the sixth attribute comprises at least one of a name of the storage resource, a specification of the storage resource, and description information of a virtual link connected to the storage resource.

8. The method according to any one of claims 1 to 7, wherein after the sending, by the CCM, the resource allocation request to the VIM, the method further comprises:
receiving, by the CCM, a resource allocation response from the VIM, wherein the resource allocation response indicates a storage resource already allocated by the VIM; and
configuring, by the CCM for the container cluster object, the storage resource already allocated by the VIM.

9. The method according to any one of claims 1 to 8, wherein the method further comprises:
receiving, by the CCM, a creation request from a CCM consumer, wherein the CCM consumer is an operation support system OSS/business support system BSS or a network functions virtualization orchestrator NFVO, and the creation request indicates the CCM to create the container cluster object;
creating, by the CCM, the container cluster object; and
sending, by the CCM, a creation response to the CCM consumer.

10. The method according to claim 9, wherein
the creation request comprises a container cluster group creation request, and the creation response comprises a container cluster group creation response;
the creation request comprises a container cluster creation request, and the creation response comprises a container cluster creation response; or
the creation request comprises a container cluster node creation request, and the creation response comprises a container cluster node creation response.

11. The method according to any one of claims 1 to 10, wherein the obtaining, by a CCM, storage resource description information comprises:
obtaining, by the CCM, the storage resource description information from a descriptor file of the container cluster object; or
obtaining, by the CCM, the storage resource description information from a virtualized network function descriptor VNFD file.

12. The method according to any one of claims 1 to 11, wherein before the sending, by the CCM, the resource allocation request to the VIM, the method further comprises:
sending, by the CCM, a life cycle granting request to the CCM consumer, wherein the life cycle granting request is for applying for grant for life cycle management of the container cluster object, and the CCM consumer is an OSSBSS or an NFVO; and
receiving, by the CCM, a life cycle granting response from the CCM consumer, wherein the life cycle granting response comprises a granting indication, and the granting indication indicates that the CCM is allowed to initiate a life cycle management process of the container cluster object.

13. An apparatus for managing storage resources of a container cluster, wherein the apparatus is disposed in a container cluster management CCM, and the apparatus comprises:
an obtaining unit, configured to obtain storage resource description information, wherein the storage resource description information is used to describe a storage resource requirement of a container cluster object managed by the CCM, and the container cluster object comprises at least one of a container cluster group, a container cluster, or a container cluster node;
a generation unit, configured to generate a resource allocation request based on the storage resource description information, wherein the resource allocation request indicates a virtualized infrastructure manager VIM to allocate a storage resource; and
a sending unit, configured to send the resource allocation request to the VIM.

14. The apparatus according to claim 13, wherein the storage resource description information comprises a first attribute of the storage resource, and the first attribute indicates a layer of a container cluster object to which the storage resource is applicable.

15. The apparatus according to claim 13 or 14, wherein the storage resource description information comprises a second attribute of the storage resource, the second attribute indicates whether the storage resource is statically provided or dynamically allocated, the statically providing the storage resource is that the storage resource is allocated before the container cluster object is created, and the dynamically allocating the storage resource is that the storage resource is allocated in a creation process of the container cluster object.

16. The apparatus according to any one of claims 13 to 15, wherein the storage resource description information comprises a third attribute of the storage resource, and the third attribute is used to describe an affinity rule or an anti-affinity rule that the storage resource needs to meet.

17. The apparatus according to any one of claims 13 to 16, wherein the storage resource description information comprises a fourth attribute of the storage resource, and the fourth attribute is used to describe whether the storage resource is a persistent storage resource or an ephemeral storage resource.

18. The apparatus according to any one of claims 13 to 17, wherein the storage resource description information comprises a fifth attribute of the storage resource, the fifth attribute is used to describe whether the storage resource is a dedicated storage resource or a shared storage resource, wherein the dedicated storage resource is a storage resource that is allowed to be used only by a specific sub-object in the container cluster object, and the shared storage resource is a storage resource that is allowed to be used by each sub-object in a plurality of sub-objects in the container cluster object.

19. The apparatus according to any one of claims 13 to 18, wherein the storage resource description information comprises a sixth attribute of the storage resource, and the sixth attribute comprises at least one of a name of the storage resource, a specification of the storage resource, and description information of a virtual link connected to the storage resource.

20. The apparatus according to any one of claims 13 to 19, wherein the apparatus further comprises:
a receiving unit, configured to receive a resource allocation response from the VIM, wherein the resource allocation response indicates a storage resource already allocated by the VIM; and
a configuring unit, configured to configure the storage resource already allocated by the VIM for the container cluster object.

21. The apparatus according to any one of claims 13 to 20, wherein the apparatus further comprises:
a receiving unit, configured to receive a creation request from a CCM consumer, wherein the CCM consumer is an operation support system OSS/business support system BSS or a network functions virtualization orchestrator NFVO, and the creation request indicates to create the container cluster object;
a creating unit, configured to create the container cluster object; and
the sending unit, further configured to send a creation response to the CCM consumer.

22. A computing device, wherein the computing device comprises a processor and a memory, wherein
the memory stores computer instructions; and
the processor executes the computer instructions to implement the method according to any one of claims 1 to 12.

23. A network system, wherein the network system comprises the apparatus according to any one of claims 13 to 21 and an apparatus disposed in a VIM.

24. A computer-readable storage medium, wherein the storage medium stores at least one instruction, and when the instruction is run on a computer, the computer is enabled to perform the method according to any one of claims 1 to 12.
